# EUROPÄISCHE PATENTSCHRIFT

(11) **EP 0 805 301 B1**
(45) Veröffentlichungstag und Bekanntmachung des Hinweises auf die Patenterteilung: **04.12.2002**
(21) Anmeldenummer: 97890082.7
(22) Anmeldetag: 02.05.1997
(51) Int. Cl.: F16L 55/16, F16L 55/162, F16L 55/165, E03F 3/06

(54) **Einsatzteil und Verfahren zum Sanieren der undichten Wände von Leitungen unter Verwendung eines solchen Einsatzteiles**
Insert and procedure for the renovation of leaking pipe walls using such an insert
Pièce d'insertion et procédure pour la rénovation des parois non-étanches de canalisation utilisant une telle pièce

(30) Priorität: 03.05.1996 AT 80096
(43) Veröffentlichungstag der Anmeldung: 05.11.1997
(73) Patentinhaber: Kübel, Johann, 3072 Kasten (AT)
(72) Erfinder: Kübel, Johann, 3072 Kasten (AT)
(74) Vertreter: Brauneiss, Leo, Dipl.Ing.

(56) Entgegenhaltungen:
- EP-A- 0 506 181
- EP-A- 0 518 521
- DE-A- 4 031 949
- DE-C- 4 410 592

## Beschreibung

Die Erfindung betrifft einen Einsatzteil, der für die Herstellung einer Verbindung zwischen der aus Kunststoff bestehenden Innenwand einer Rohrleitung, eines Kanales od.dgl. und einem mit einem Kunststoffkleber, insbesondere einem durch Wärmezufuhr aushärtbaren Polyesterharz, getränkten Laminat angeordnet wird. Femer betrifft die Erfindung ein Verfahren zum Sanieren der undichten Wände von Rohrleitungen, Kanälen od.dgl., deren Innenwand aus einem Kunststoffmaterial, vorzugsweise aus Polyäthylen besteht oder mit einem Inliner aus Kunststoff, vorzugsweise aus Polyäthylen, versehen ist, wobei auf die zu sanierenden Innenwandteile ein mit einem Polyesterharz getränktes Laminat aufgebracht und durch Einwirken einer Wärmestrahlung aushärten gelassen wird.

Vor allem bei Kanälen treten insbesondere an jenen Stellen, wo zu den Grundstücken führende Kanalabzweigleitungen in den Hauptkanal bzw. Sammelkanal münden, häufig undichte Stellen, insbesondere Spalte und Risse auf, durch die einerseits das im Kanal befindliche Abwasser austritt, wodurch es zu einer Verschmutzung des Grundwassers kommt, andererseits aber auch Grundwasser in den Kanal eintreten kann, wodurch die vom Kanal abzuführende Wassermenge in unerwünschter Weise erhöht wird. Es ist daher erforderlich, diese undichten Stellen zu sanieren. Um Grabungsarbeiten zu vermeiden, werden solche Sanierungsarbeiten von sogenannten Kanalrobotem vorgenommen. Es sind dies im Haupt- bzw. Sammelkanal verfahrbare Geräte, die mit wenigstens einem motorisch bewegbaren Arm versehen sind, an dem verschiedene Bearbeitungseinrichtungen befestigt werden können. Die Fortbewegung des Gerätes und die Bewegung des Armes sind von der Oberfläche steuerbar und können durch eine am Gerät befestigte Videokamera überwacht werden.

Nach einem bekannten Verfahren wird im Bereich eines zu sanierenden Kanalabschnittes ein schlauchförmiges, mit einem durch Einwirkung einer Wärmestrahlung aushärtenden Polymerharz getränktes Laminat unter Druckeinwirkung aufgebracht und in der Folge durch Einwirken einer UV-Strahlung aushärten gelassen. Die Aushärtung erfolgt hiebei innerhalb von Minuten, wobei sich das Laminat an die Oberflächenform der zu sanierenden Wandstellen anpaßt und nach seiner Versteifung fest an dieser Oberfläche anliegt. Nach einem nicht veröffentlichten Vorschlag des Anmelders kann vor dem Aufbringen des Laminates auf die an den zu sanierenden Innenwandteilen anliegenden Randbereiche des Laminates ein Epoxyharz aufgetragen werden, welches eine feste Verbindung zwischen diesen Randbereichen und der Innenwand sicherstellt und ein Eindringen von Flüssigkeit zwischen der Innenwand und dem Laminat mit Sicherheit verhindert.

Ein derartiges Verfahren ist jedoch nur anwendbar, wenn die Innenwand der zu sanierenden Rohrleitung bzw. des zu sanierenden Kanales oder ein diese Innenwand abdeckender Inliner aus Steingut, Beton oder aus Polyvinylchlorid besteht. Bei einer aus Polyäthylen hergestellten Innenwand bzw. einem aus Polyäthylen bestehenden Inliner ist ein Verkleben des Laminates mittels eines Kunststoffklebers, insbesondere mittels eines durch Wärmezufuhr aushärtbaren Polyesterharzes, nicht möglich, sodass mit dem bekannten Verfahren keine dichte Verbindung zwischen den zu sanierenden Wandteilen und dem Laminat sichergestellt ist.

Um eine dichte Verbindung zwischen einem mit einem Inliner aus Kunststoffmaterial ausgekleideten Kanal und einem in diesen Kanal einmündenden Hausanschluss mittels einer Auskleidung aus einem gestrickten oder gewebten Trägermaterial, das mit einer aushärtbaren Kunstharzmasse getränkt ist, sicherzustellen, hat man bereits vorgeschlagen (DE-A 44 10 592), den mit der Kanalauskleidung zu verbindenden Endbereich der Auskleidung in einen Flansch einzubetten, der aus einem thermoplastischen, mit dem Inliner verschweißbaren Kunststoff besteht. An der dem Inliner zugeordneten Außenfläche dieses Flansches sind Heizleiterwendeln angeordnet, durch welche bei Stromzufuhr ein Erhitzen und damit Verschweißen zwischen dem aus thermoplastischem Kunststoff bestehenden Flansch und dem aus Kunststoff bestehenden Inliner des Kanals erfolgt. Diese bekannte Ausbildung ermöglicht zwar eine flüssigkeitsdichte Verbindung, weist jedoch einen komplizierten Aufbau auf, da vor dem Einbringen des Auskleidungsschlauches in den Kanal der Endbereich desselben mit dem Flansch versehen werden muss.

Die vorliegende Erfindung hat sich zur Aufgabe gestellt, diesen Nachteil zu vermeiden und die Herstellung einer festen, flüssigkeitsdichten Verbindung zwischen der aus Kunststoff bestehenden Innenwand einer Rohrleitung, eines Kanales od.dgl. und einem mit einem Kunststoffkleber, insbesondere einem durch Wärmezufuhr aushärtbaren Polyesterharz, getränkten Laminat zu ermöglichen, wobei ein übliches, schlauchförmiges Laminat verwendet werden kann, dessen Endbereiche vor dem Einbringen keiner Bearbeitung bedürfen. Zur Lösung dieser Aufgabe schlägt die Erfindung einen vom Laminat gesonderten Einsatzteil vor, der eine kompakte Schicht aus einem dem Kunststoff, aus dem die Innenwand besteht, artgleichen Kunststoff und eine mit dieser kompakten Schicht verbundene, insbesondere auf die kompakte Schicht aufkaschierte poröse Schicht aufweist, wobei die kompakte Schicht mit der Innenwand und die poröse Schicht mit dem Laminat, vorzugsweise durch Wärmeeinwirkung, verbindbar ist. Durch Wärmeeinwirkung verschweißt sich die kompakte Schicht des Einsatzteiles mit der aus Kunststoff bestehenden Innenwand der Rohrleitung, des Kanales od.dgl. und die poröse Schicht wird über den Kunststoffkleber, vorzugsweise das durch Wärmezufuhr aushärtbare Polyesterharz, fest mit dem mit diesem Kunststoffkleber getränkten Laminat verklebt, sodass eine gute Verbindung zwischen der Innenwand und dem Laminat sichergestellt ist.

Besonders günstig ist es, wenn bei einer aus Polyäthylen bestehenden Innenwand die kompakte Schicht gleichfalls aus Polyäthylen besteht. Eine Verschweißung des Polyäthylenmateriales ist in diesem Fall ohne Schwierigkeiten erzielbar.

Zweckmäßig weist die kompakte Schicht eine Wandstärke zwischen 1 mm und 4 mm, vorzugsweise von etwa 2 mm auf. Mit einer solchen Wandstärke weist die kompakte Schicht einerseits eine hinreichende Festigkeit auf, kann sich aber andererseits noch gut an die Innenwand der Rohrleitung, des Kanales od.dgl. anschmiegen, auch wenn diese mit Unebenheiten versehen ist.

Die poröse Schicht besteht zweckmäßig aus einem Vlies, vorzugsweise aus einem Polyäthylenvlies, kann somit aus dem gleichen Material wie die kompakte Schicht gebildet sein, wodurch eine sichere Verbindung durch Aufkaschieren auf die kompakte Schicht gewährleistet ist.

Wie bereits erwähnt, ist das Laminat, welches mit der porösen Schicht verbunden wird, mit einem Kunststoffkleber getränkt, über welchen die Verbindung mit der porösen Schicht erfolgt. Um eine gute Verbindung sicherzustellen, ist es von Vorteil, auch die poröse Schicht mit einem Kunststoffkleber, insbesondere mit einem durch Wärmezufuhr aushärtbaren Polyesterharz, zu tränken, sodaß eine einwandfreie Verklebung sichergestellt ist.

Wie bereits erwähnt, wird die kompakte Schicht mit der Innenwand der Rohrleitung verschweißt, wozu der Kunststoff dieser Innenwand und der kompakten Schicht mittels Wärmezufuhr angeteigt werden muß. Dies wird zweckmäßig dadurch erzielt, daß die kompakte Schicht mit elektrischen, mit einer Stromquelle verbindbaren Widerstands-Heizdrähten versehen ist. Um lediglich eine Erwärmung der einander berührenden Oberflächen zwecks Verschweißung derselben zu erzielen, ist es von Vorteil, die elektrischen Widerstands-Heizdrähte an der Oberfläche der kompakten Schicht anzuordnen, vorzugsweise in diese Oberfläche teilweise einzubetten.

Bei Durchführung eines Verfahrens zum Sanieren der undichten Wände von Rohrleitungen, Kanäelen od.dgl., deren Innenwand aus einem Kunststoffmaterial, vorzugsweise aus Polyäthylen besteht, oder mit einem Inliner aus Kunststoff, vorzugsweise aus Polyäthylen, versehen ist, wobei auf die zu sanierenden Innenwandteile ein mit einem Polyesterharz getränktes Laminat aufgebracht und durch Einwirken einer Wärmestrahlung aushärten gelassen wird, wird zweckmäßig so vorgegangen, daß auf die Innenwand bzw. den Inliner die kompakte Schicht des Einsatzteiles mit ihrer Oberfläche zur Anlage gebracht und anschließend das Laminat auf die poröse Schicht des Einsatzteiles aufgebracht wird, worauf durch Wärmeeinwirkung sowohl der Kunststoffkleber ausgehärtet wird, als auch eine Verschweißung zwischen der Innenwand bzw. dem Inliner und der kompakten Schicht des Einsatzteiles erfolgt. Die Wärmezufuhr wird vorzugsweise in an sich bekannter Weise über eine Wärmestrahlungsquelle, insbesondere eine UV-Strahler bewirkt und zusätzlich werden die elektrischen Widerstands-Heizdrähte an Spannung gelegt, sodaß sowohl eine einwandfreie statische und druckdichte Verbindung zwischen der Innenwand bzw. dem Inliner und der kompakten Schicht des Einsatzteiles als auch zwischen dem Laminat und der porösen Schicht des Einsatzteiles erfolgt.

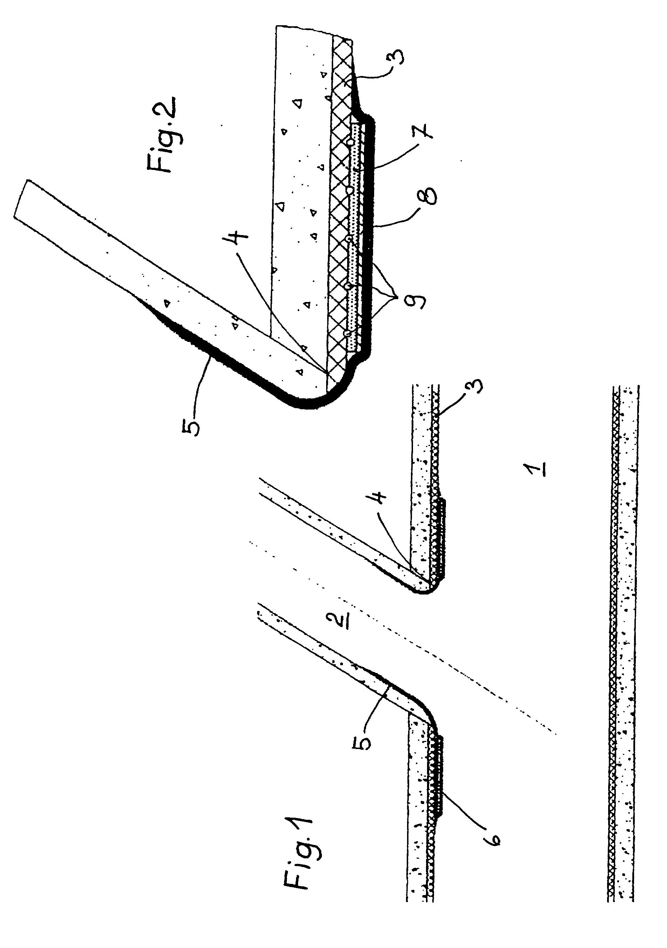

In der Zeichnung ist die Erfindung anhand eines Ausführungsbeispieles schematisch veranschaulicht. Fig. 1 zeigt eine Kanalabzweigung von einem Hauptkanal, wobei sich im Bereich der Abzweigung die zu sanierende Stelle befindet, und Fig. 2 stellt in größerem Maßstab einen erfindungsgemäßen Einsatzteil dar.

In den Hauptkanal 1 mündet eine Kanalabzweigung 2. Der Hauptkanal 1 ist mit einem aus Polyäthylen bestehenden Inliner 3 ausgekleidet. Die undichte Stelle in Form einer Spalte 4 wird in an sich bekannter Weise durch ein mit Polyesterharz getränktes Laminat 5 saniert, das unter Druckeinwirkung aufgebracht wird, wobei das Polyesterharz durch Wärmeeinwirkung, insbesondere durch UV-Strahlung, aushärten gelassen wird. Auf diese Weise kann zwar eine feste und flüssigkeitsdichte Verbindung zwischen dem Laminat 5 und der Kanalabzweigung 2 erzielt werden, nicht jedoch mit dem Inliner 3 aus Polyäthylen, da sich Polyäthylen nicht mittels des Polyesterharzes mit dem Laminat 5 verkleben läßt.

Um auch eine feste, flüssigkeitsdichte Verbindung zwischen dem Inliner 3 und dem Laminat 5 herzustellen, ist ein erfindungsgemäßer Einsatzteil 6 vorgesehen. Dieser Einsatzteil 6 besteht, wie aus Fig. 2 ersichtlich ist, aus zwei Schichten, nämlich aus einer kompakten Schicht 7 aus Polyäthylen und aus einer porösen Schicht 8 in Form eines Polyäthylenvlieses, das auf die kompakte Schicht 7 aufkaschiert ist. Das Polyäthylenvlies 8 ist mit einem Polyesterharz getränkt.

In die Oberfläche der kompakten Schicht 7 aus Polyäthylen sind Widerstands-Heizdrähte 9 teilweise eingebettet.

Der Einsatzteil 6 wird vor Aufbringen des Laminates 5 auf dem Inliner 3 zur Anlage gebracht, derart, daß die Widerstands-Heizdrähte 9 den Inliner 3 berühren. Anschließend wird das Laminat 5 auf die poröse Schicht 8 des Einsatzteiles 6 aufgebracht. Diese Arbeiten werden mittels eines Kanalroboters durchgeführt, an dem auch ein UV-Strahler angeordnet ist. Außerdem weist der Kanalroboter elektrische Anschlüsse für die Anspeisung der Widerstands-Heizdrähte 9 auf. Durch Wärmezufuhr mittels des UV-Strahlers und durch Anspeisung der Widerstands-Heizdrähte erfolgt sowohl ein Anteigen der einander berührenden Oberflächen des Inliners 3 und der kompakten Schicht 7 und damit eine Verschweißung dieser Oberflächen als auch eine Verklebung der porösen Schicht 8 mit dem Laminat 5 durch Aushärten des Polyesterharzes, mit dem sowohl das Laminat 5 als auch die poröse Schicht 8 getränkt sind. Die Aushärtezeit und auch die für die Verschweißung benötigte Zeit beträgt lediglich einige Minuten, sodaß der Kanalanschluß rasch wieder benützt werden kann.

## Patentansprüche

1. Einsatzteil, der für die Herstellung einer Verbindung zwischen der aus Kunststoff bestehenden Innenwand einer Rohrleitung, eines Kanales od.dgl. und einem mit einem Kunststoffkleber, insbesondere einem durch Wärmezufuhr aushärtbaren Polyesterharz, getränkten Laminat (5) angeordnet wird, **dadurch gekennzeichnet, daß** der Einsatzteil (6) eine kompakte Schicht (7) aus einem dem Kunststoff, aus dem die Innenwand besteht, artgleichen Kunststoff und eine mit dieser kompakten Schicht (7) verbundene, insbesondere auf diese kompakte Schicht (7) aufkaschierte, poröse Schicht (8) aufweist, wobei die kompakte Schicht (7) mit der Innenwand und die poröse Schicht (8) mit dem Laminat (5), vorzugsweise durch Wärmeeinwirkung, verbindbar ist.

2. Einsatzteil nach Anspruch 1, **dadurch gekennzeichnet, daß** bei einer aus Polyäthylen bestehenden Innenwand die kompakte Schicht (7) gleichfalls aus Polyäthylen besteht.

3. Einsatzteil nach Anspruch 1 oder 2, **dadurch gekennzeichnet, daß** die kompakte Schicht (7) eine Wandstärke zwischen 1 mm und 4 mm, vorzugsweise von etwa 2 mm, aufweist.

4. Einsatzteil nach Anspruch 1,2 oder 3, **dadurch gekennzeichnet, daß** die poröse Schicht (8) aus einem Vlies, vorzugsweise aus einem Polyäthylenvlies besteht.

5. Einsatzteil nach einem der Ansprüche 1 bis 4, **dadurch gekennzeichnet, daß** die poröse Schicht (8) mit einem Kunststoffkleber, insbesondere mit einem durch Wärmezufuhr aushärtbaren Polyesterharz, getränkt ist.

6. Einsatzteil nach einem der Ansprüche 1 bis 5, **dadurch gekennzeichnet, daß** die kompakte Schicht (7) mit elektrischen, mit einer Stromquelle verbindbaren Widerstands-Heizdrähten (9) versehen ist.

7. Einsatzteil nach Anspruch 6, **dadurch gekennzeichnet, daß** die elektrischen Widerstands-Heizdrähte (9) an der Oberfläche der kompakten Schicht (7) angeordnet, vorzugsweise in diese Oberfläche teilweise eingebettet sind.

8. Verfahren zum Sanieren der undichten Wände von Rohrleitungen, Kanälen od.dgl., deren Innenwand aus einem Kunststoffmaterial, vorzugsweise aus Polyäthylen besteht oder mit einem Inliner (3) aus einem Kunststoffmaterial, vorzugsweise aus Polyäthylen versehen ist, wobei auf die zu sanierenden Innenwandteile ein mit einem Polyesterharz getränktes Laminat (5) aufgebracht und durch Einwirken einer Wärmestrahlung aushärten gelassen wird, unter Verwendung eines Einsatzteiles (6) nach einem der Ansprüche 1 bis 7, **dadurch gekennzeichnet, daß** auf die Innenwand bzw. den Inliner (3) die kompakte Schicht (7) des Einsatzteiles (6) mit ihrer Oberfläche zur Anlage gebracht und anschließend das Laminat (5) auf die poröse Schicht (8) des Einsatzteiles (6) aufgebracht wird, worauf durch Wärmeeinwirkung sowohl der Kunststoffkleber ausgehärtet wird, als auch eine Verschweißung zwischen der Innenwand bzw. dem Inliner (3) und der kompakten Schicht (7) des Einsatzteiles (6) erfolgt.

9. Verfahren nach Anspruch 8, **dadurch gekennzeichnet, daß** die Wärmezufuhr in an sich bekannter Weise über eine Wärmestrahlungsquelle, insbesondere einen UV-Strahler erfolgt und zusätzlich die elektrischen Widerstands-Heizdrähte (9) an Spannung gelegt werden.

## Claims

1. Insert, that in order to establish a connection is arranged between the interior wall made of synthetic material of a pipe, a channel or the like and a laminate soaked with plastic adhesive, particularly a polyester resin cureable by heat,
**characterized in that** the insert (6) comprises a compact layer (7) of a synthetic material equal to the synthetic material of the interior wall and a porous layer (8) bonded or joined with the compact layer (7), particularly laminated to this compact layer (7), the compact layer (7) being connectable to the interior wall and the porous layer (8) being connectable to the laminate (5), preferably by heat.

2. Insert according to claim 1 **characterized in that** the compact layer (7) of an interior wall made of polyethylene also consists of polyethylene.

3. Insert according to claims 1 or 2 **characterized in that** the compact layer (7) has a thickness of between 1 mm and 4 mm, preferably of approximately 2 mm.

4. Insert according to claims 1, 2 or 3 **characterized in that** the porous layer (8) consists of a fleece, preferably a polyethylene fleece.

5. Insert according to one of the claims 1 to 4 **characterized in that** the porous layer (8) is soaked with a plastic adhesive particularly a polyester resin cureable by heat.

6. Insert according to one of the claims 1 to 5 **characterized in that** the compact layer (7) is provided with electric resistance heating-wires (9) connectable to a source of electric power.

7. Insert according to claim 6 **characterized in that** the electric resistance heating-wires (9) are arranged on the surface of the compact layer (7), preferably partially embedded into said surface.

8. Procedure for the renovation of the leaking walls of pipes, channels or the like, the interior wall of which consists of a synthetic material, preferably polyethylene, or is provided with an inliner (3) made of a synthetic material, preferably polyethylene, wherein a laminate soaked with plastic adhesive is deposited onto the areas of the interior wall to be renovated and is left to cure by the effect of thermal radiation, using an insert (6), according to claims 1 to 7, **characterized in that** the surface of the compact layer (7) of the insert (6) is brought in contact with the interior wall or the inliner (3) respectively and that subsequently the laminate (5) is deposited onto the porous layer (8) of the insert (6), whereupon the plastic adhesive is cured by heat on the one hand and a welding of the interior wall or the inliner (3) respectively and the compact layer (7) of the insert (6) occurs on the other hand.

9. Procedure according to claim 8, **characterized in that** the heat supply occurs via a heat radiator in a known manner, particularly via a UV-radiator and that additionally the electric heating resistance-wires (9) are connected to a voltage terminal.

## Revendications

1. Pièce d'insertion permettant d'assembler la paroi interne en matière plastique d'un conduit, d'une canalisation ou similaire et un laminé (5) imprégné de colle plastique, en particulier d'une résine polyester thermodurcissable, **caractérisée en ce que** la pièce d'insertion (6) comporte une couche compacte (7) en matière plastique de même type que celle composant la paroi interne et une couche poreuse (8) reliée à ladite couche compacte (7) et en particulier rapportée par collage sur celle-ci, ladite couche compacte (7) pouvant être raccordée à la paroi interne et la couche poreuse (8) pouvant être raccordée au laminé (5) de préférence par apport de chaleur.

2. Pièce d'insertion selon la revendication 1, **caractérisée en ce que** lorsque la paroi interne est en polyéthylène, la couche compacte (7) est également en polyéthylène.

3. Pièce d'insertion selon la revendication 1 ou 2, **caractérisée en ce que** la couche compacte (7) présente une épaisseur de paroi comprise entre 1 et 4 mm et de préférence égale à environ 2 mm.

4. Pièce d'insertion selon l'une des revendications 1, 2 et 3, **caractérisée en ce que** la couche poreuse (8) consiste en un non-tissé, de préférence un non-tissé en polyéthylène.

5. Pièce d'insertion selon l'une des revendications 1 à 4, **caractérisée en ce que** la couche poreuse (8) est imprégnée de colle plastique, en particulier de résine polyester thermodurcissable.

6. Pièce d'insertion selon l'une des revendications 1 à 5, **caractérisée en ce que** la couche compacte (7) est dotée de conducteurs électriques de chauffage par résistance ohmique (9) pouvant être reliés à une source de courant.

7. Pièce d'insertion selon la revendication 6, **caractérisée en ce que** les conducteurs électriques de chauffage par résistance ohmique (9) sont agencés à la surface de la couche compacte (7), et de préférence partiellement noyés dans ladite surface.

8. Procédé de rénovation des parois non-étanches de conduits, canalisations ou similaires, dont la paroi interne est composée de matière plastique, de préférence de polyéthylène, ou dotée d'un revêtement intérieur (3) en matière plastique, de préférence en polyéthylène, un laminé (5) imprégné de résine polyester étant rapporté sur les portions de paroi interne à rénover et étant durci sous l'effet d'un rayonnement thermique, ledit procédé mettant en oeuvre une pièce d'insertion (6) selon l'une des revendications 1 à 7 et étant **caractérisé en ce que** la surface de la couche compacte (7) de la pièce d'insertion (6) est placée contre la paroi interne ou le revêtement intérieur (3), le laminé (5) étant ensuite placé sur la couche poreuse (8) de la pièce d'insertion (6), après quoi, la colle plastique est durcie par apport de chaleur, soudant entre eux la paroi interne ou le revêtement intérieur (3) et la couche compacte (7) de la pièce d'insertion (6).

9. Procédé selon la revendication 8, **caractérisé en ce que** l'apport de chaleur s'effectue d'une manière connue en soi par le biais d'une source de rayonnement thermique, en particulier d'un générateur d'UV, et **en ce que**, à titre complémentaire, l'on applique une tension aux bornes des conducteurs électriques de chauffage ohmique (9).
